# EUROPÄISCHE PATENTANMELDUNG

(11) **EP 1 527 982 A1**
(43) Veröffentlichungstag der Anmeldung: **04.05.2005**
(21) Anmeldenummer: 04012926.4
(22) Anmeldetag: 01.06.2004
(51) Int. Cl.: B62D 13/04, B62D 13/06

(54) **Gesteuert lenkbare Achse für einen Anhänger**

(30) Priorität: 31.10.2003 IT MI20030505 U
(71) Anmelder: A.D.R. S.p.A., 21040 Uboldo (Varese) (IT)
(72) Erfinder: Frigerio, Sergio, 20142 Milano (IT)
(74) Vertreter: Mayer, Hans Benno, Dipl.-Ing.

(57) **Zusammenfassung**

Gesteuert lenkbare Achse für einen Anhänger, wobei die geometrische Achse (Y) des Gelenkes (20) in Fahrtrichtung gesehen (f) vor der geometrischen Achse (X) der Achse (1) um einen kleinen Betrag (a) angeordnet ist.

## Beschreibung

Die vorstehende Erfindung betrifft eine gesteuert lenkbare Achse für einen Anhänger eines landwirtschaftlichen Fahrzeuges oder Industriefahrzeuges.

Es ist aus dem Stand der Technik bekannt, dass zur Erleichterung der Steuerbarkeit eines Anhängers in einer Kurve, wobei der Anhänger mit zwei oder mehreren benachbart angeordneten Achsen ausgerüstet ist. Dieser mit einer oder mehreren Achsen ausgerüstete Anhänger ist mit gesteuert, selbstlenkbaren Achsen ausgerüstet.
Diese bekannte Achsen kennzeichnen sich dadurch, dass eine automatische Einstellung des Lenkwinkels der Räder gegenüber der Laufbahn des Zugfahrzeuges erfolgt.

Diese Einstellung wird durch den Einsatz besonderer Ausführungsformen in geometrischer und kinematischer Weise erreicht, die kennzeichnend für die Achsen sind, wobei vorgesehen ist, dass das Gelenk der Lenkvorrichtung wesentlich vor der Mittellinie der Kontaktfläche des Rades mit dem Boden zu liegen kommt.

In diesem Fall wird durch das Haftvermögen zwischen Rad und Boden ein Moment erzeugt, das das Rad bzw. die Räder entsprechend gegenüber der Laufbahn ausrichtet, die vom Zugfahrzeug durchfahren wird.

Die bekannte, selbststeuernde Achse, so wie sie ausgerüstet ist, wirkt aber nur in einer Fahrtrichtung. Wird die Fahrtrichtung des Fahrzeuges umgekehrt, zum Beispiel im Falle von durchzuführenden Lenkmanövern, so wird die Relativstellung zwischen Rad und Gelenkachse umgekehrt, was dazu führt, dass ein Ausrichten der Räder gegenüber der Laufbahn nicht mehr steuerbar ist.

Um diesem Nachteil entgegenzuwirken, werden selbststeuernde Achsen üblicherweise mit einer Verriegelungseinrichtung ausgerüstet, die dazu dient, die Achsen in feststehende Vorrichtungen umzuwandeln. Dies führt zu einer Beeinträchtigung der freien Verfahrbarkeit des Anhängers und desweiteren zu einem außerordentlichen Verschleiß der kostenaufwändigen Reifen während des Verfahrens des Anhängers.

Eine weitere bekannte Ausführungsform, mit der eine Lenkwirkung, sowohl während der Geradeausfahrt, als auch während einer Rückwärtsbewegung des Anhängers ermöglicht wird, besteht aus einer selbststeuernden Achse, der eine hydraulische Vorrichtung zugeordnet ist, die eine Relativstellung zwischen Zugfahrzeug und Anhänger berücksichtigt.

Mit dieser bekannten Vorrichtung ist es möglich, dem Anhänger eine Laufrichtung aufzuprägen, die mit der Laufrichtung des Zugfahrzeuges übereinstimmt, und dies sowohl während der Vorrausfahrt, als auch während einer nach rückwärts gerichteten Fahrbewegung.

Bei dieser bekannten Vorrichtung werden doppeltwirkende Kolben/Zylindereinheiten eingesetzt, die über eine als Pumpe wirkende Kolben/Zylindereinheit gesteuert werden, wobei die Kolben/Zylindereinheit auf der Deichsel des Anhängers angeordnet ist und gelenkig an einem bestimmten Punkt des Zugfahrzeuges angreift.

Auch diese Ausführungsform bringt Nachteile hinsichtlich der Verfahrbarkeit bei Rückwärtsfahrt mit sich, da dem Moment der auftretenden Kräfte, aufgrund des Aufliegens der Räder, mit Schwierigkeiten durch den Steuerzylinder entgegengewirkt werden kann, da dessen Wirksamkeit vom eingestellten Druck der Hydraulikanlage abhängig ist, und der Gegenwirkung die von der Zugmaschine über den Steuerzylinder aufgebracht werden kann, dies aufgrund des großen Hebelarmes zwischen den Rädern und dem Gelenk der Selbstlenkvorrichtung ?

Es ist Aufgabe der vorstehenden Erfindung, die Nachteile des Standes der Technik zu vermeiden und eine lenkbare Achse für einen landwirtschaftlich genutzten Anhänger oder für einen Anhänger eines Industriefahrzeuges vorzuschlagen, der eine einwandfreie Fahrt sowohl in Vorwärtsrichtung, als auch in Rückwärtsrichtung erlaubt.

Diese Aufgabe wird mit einer gesteuert lenkbaren Achse für einen Anhänger erreicht, die sich dadurch kennzeichnet, dass die Geometrieachse (Y) des Gelenkes in Fahrtrichtung (f) gegenüber der Geometrieachse (X) der Achse um einen geringen Betrag (a) vorverlegt ist.

Der Erfindungsgegenstand wird nun genauer beschrieben und anhand eines Ausführungsbeispieles in den beigefügten Zeichnungen dargestellt.

Figur 1 zeigt in einer Draufsicht eine lenkbare Achse für einen Anhänger gemäß der vorstehenden Erfindung.

Figur 2 zeigt ein Detail des Gelenkes, welches ein Rad eines Anhängers aufnimmt.

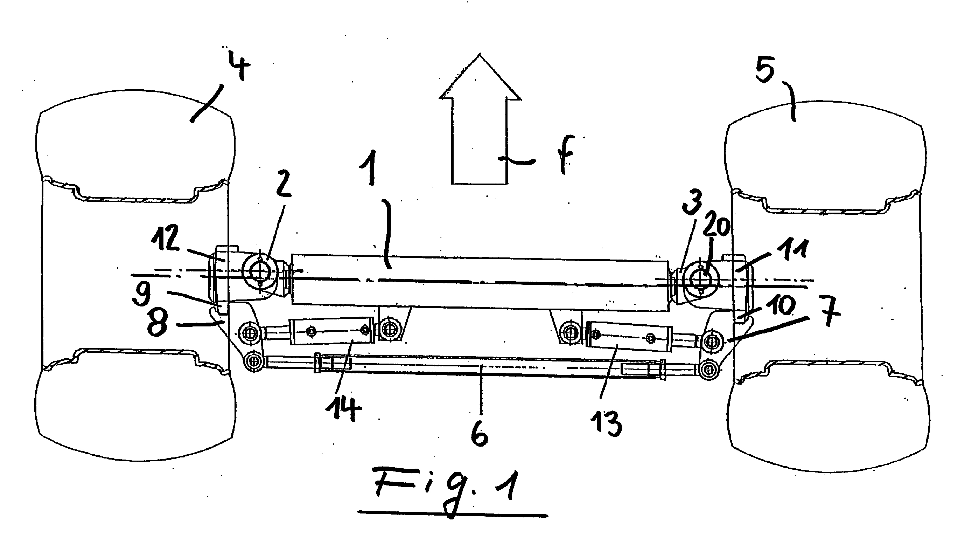

Der Figur 1 kann in einer Draufsicht die Achse 1 für einen landwirtschaftlich genutzten Anhänger oder einen Anhänger für ein Industriefahrzeug entnommen werden. Der Anhänger ist in Vorwärtsrichtung gemäß dem Pfeil f oder mit einer Rückwärtsbewegung in entgegengesetzter Richtung verfahrbar.

An den beiden Enden der Achsen sind zwei Gelenke 2 und 3 vorgesehen, die in bekannter Weise die Reifen für Räder 4 und 5 aufweisen.

Parallel zur Achse 1 ist eine bekannte Verbindungsstrebe 6 vorgesehen, deren Enden gelenkig mit einem Steuerhebel 7 bzw. 8 verbunden sind. Dieser steht unter Zuhilfenahme von Ausnehmungen mit abstehenden Teilen 9 und 10 von Achsschenkeln 11 und 12 in Verbindung, welche das dazugehörige Rad 4 bzw. 5 lagern.

Die Steuerhebel 7, 8 sind unter Zuhilfenahme von Kolben/Zylindereinheiten 13, 14 mit der rohrförmig ausgebildeten Achse 1 verbunden.

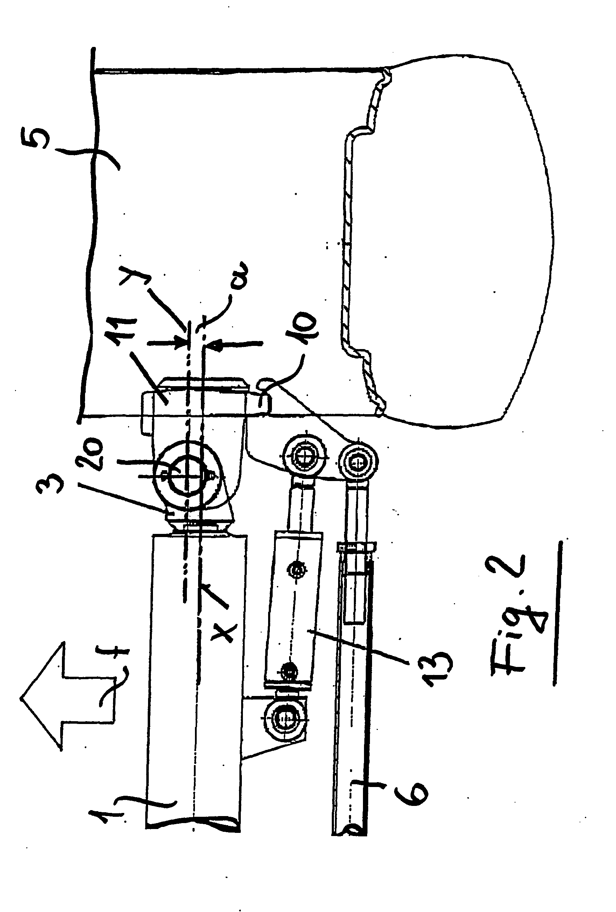

In Figur 2 ist in vergrößertem Maßstab Teil des Rades 5 dargestellt sowie Bauteile, die am rechten Ende der Achse 1 angeordnet sind.

Der Figur 2 kann deutlich entnommen werden, dass die Achse des Gelenkes 20, die mit Y gekennzeichnet ist, um einen geringen Betrag (a) vor der geometrischen Achse X, der Achse 1 zu liegen kommt.

Der Betrag (a) entspricht ungefähr 20 mm.

Theoretische Betrachtungen und praktische Versuche haben aufgezeigt, dass dieser Wert des Vorlaufes der Versetzung nach vorne geeignet ist, ein sicheres Verfahren des Anhängers zu ermöglichen und das Reaktionsmoment auf ein Minimum zu beschränken. Durchgeführte Versuche hinsichtlich der Achsgeometrie, um das Verhalten der Fahrzeuge bei Kurvenfahrt zu analysieren, haben aufgezeigt, dass mit der erfindungsgemäßen Lösung die theoretische Bahn um einen Winkel von kleiner 2° abweicht, wodurch ein minimales Abrutschen des Reifens bei Kurvenfahrt auftritt und somit eine Verbesserung der Lebensdauer des teuren Reifens möglich wird.

Die konstruktive Ausgestaltung gemäß der vorstehenden Erfindung hat sich als wirkungsvoll erwiesen, sowohl während einer Vorwärtsfahrt, als auch während einer Rückwärtsbewegung, da der verminderte Wert des Reaktionsmomentes der Räder stets gut durch die hydraulische Steuervorrichtung ausgeglichen werden kann.

Sollte die Hydraulikanlage des Fahrzeuges außer Betrieb sein, so müsste für eine Rückwärtsfahrt ein Blockieren der lenkbaren Achse erfolgen, zum Beispiel unter Zuhilfenahme einer mechanischen Arretierung. Eine Vorwärtsfahrt wird hingegen immer möglich sein, da eine Verlagerung des Gelenkes nach vorne ausreichend ist, um die Funktion einer selbststeuernden Einrichtung zu übernehmen.

Auch in diesem Fall, aufgrund des verringerten Reaktionsmomentes, das dank der besonderen Geometrie der Achse erreicht wird, wird es ermöglicht, dass diese Vorrichtung keine besonderen baulichen Probleme oder Sicherheitsprobleme aufweist.

## Patentansprüche

1. Gesteuert lenkbare Achse für einen Anhänger, **dadurch gekennzeichnet, dass** die Geometrieachse (Y) des Gelenkes (20) in Fahrtrichtung (f) gegenüber der Geometrieachse (X) der Achse (1) um einen geringen Betrag (a) vorverlegt ist.

2. Gesteuert lenkbare Achse für einen Anhänger, nach Patentanspruch 1, **dadurch gekennzeichnet, dass** der Wert (a) zwischen der Geometrieachse (X) und der Geometrieachse (Y) des Gelenkes (20) einen Wert von circa 20 mm entspricht.
